# EUROPEAN PATENT SPECIFICATION

(11) **EP 2 280 839 B1**
(45) Date of publication and mention of the grant of the patent: **20.11.2013**
(21) Application number: 09750862.6
(22) Date of filing: 18.05.2009
(51) Int. Cl.: B60G 17/016, B60G 17/018

(54) **METHOD AND SYSTEM FOR CONTROLLING THE LEVEL OF A VEHICLE CHASSIS**
VERFAHREN UND SYSTEM ZUR STEUERUNG DER HÖHE EINES FAHRZEUGCHASSIS
PROCÉDÉ ET SYSTÈME PERMETTANT LE CONTRÔLE DU NIVEAU D' UN CHÂSSIS DE VÉHICULE

(30) Priority: 19.05.2008 SE 0801151
(43) Date of publication of application: 09.02.2011
(73) Proprietor: Scania CV AB (publ), 151 87 Södertälje (SE)
(72) Inventor: RONVALL, Lars, S-641 35 Katrineholm (SE)
(86) International application number: PCT/SE2009/000256
(87) International publication number: WO 2009/142567

(56) References cited:
- EP-A1- 0 393 655
- EP-A2- 0 956 982
- DE-A1- 19 622 677
- DE-A1- 19 622 677
- US-A1- 2004 260 442
- US-A1- 2006 267 296
- US-B1- 6 234 493

## Description

### Field of the invention

The present invention relates to vehicle level control systems, and in particular to a method for controlling the vehicle level during braking, according to the preamble of claim 1.

### Background of the invention

In heavy vehicles, such as trucks, busses and tractors, it is, in general, desirable to have a vehicle level control system. The vehicle level control system can be used to compensate for varying load levels and varying load distributions. The vehicle level control system can also be used to adjust the load distribution on the vehicle axis (in particular, load distribution among the drive (rear) axle and one or more load bearing axles (in the following referred to as tag axle. Further, the term tag axle is to be interpreted as any load bearing axle, irrespective of its location on the vehicle, and also as axles on vehicles constituting trailers). This can, for example, be used to increase the load on the drive axle when driving uphill in slippery conditions, and, conversely, to reduce load on a single axle in order to fulfil maximum axle load restrictions.

The vehicle level control system is also often used to keep the vehicle chassis at a desired level relative to the vehicle axles during driving, if possible, with regard to current load/load distribution of the vehicle.

EP 0956982 A2 disclose a level control system for a vehicle, where a preferred level can be selected, to be held by the vehicle when the vehicle stops.

There are, however, situations when the vehicle level control system is disengaged and/or exhibiting an improper behaviour during driving. For example, the vehicle level control system is often disengaged during vehicle braking. When braking (decelerating) a vehicle, a force in the direction opposite to the direction of travelling of the vehicle arises at the contact point between the vehicle tyres and the surface beneath, which will be counteracted by the vehicle inertia. The difference in height between the centre of gravity of the vehicle and the surface, will, in turn, give rise to a rotational motion having the result that the pressure on the rear axle(s) decreases while the pressure on the steering axle increases.

If, in such situations, the level control system of the vehicle compensates for the increased pressure on the front axle during braking, this will result in an attempt to raise the chassis with respect to the front axle, that is, applying a counter-pressure that counteracts the effect of the vehicle inertia.

However, once the vehicle is stopped, the changes in axle pressures according to the above also ceases, and consequently the front axle level will be overcompensated, with too high a chassis's level at the front as a result.

If, on the other hand, the vehicle level control system is deactivated during braking, the increased pressure on the front axle during the retardation will, as will be explained more in detail below, result in a vehicle with too low a chassis level at the front once the vehicle has been stopped.

Consequently, there exists a need for an improved method of vehicle level control during braking.

### Summary of the invention

It is an object of the present invention to provide a method that solves or at least mitigates the above mentioned problem. This object is achieved by a method according to the characterizing portion of claim 1.

According to the present invention, it is provided a method of controlling the level of a vehicle chassis with respect to at least one vehicle axle, the said vehicle comprising a vehicle level control system, wherein the said vehicle level control system is deactivated during deceleration, the method comprising the step of, when the vehicle has stopped and the vehicle brake is still applied, reactivating the vehicle level control system after a first period of time, and when reactivating the said vehicle control system, comparing the vehicle chassis level with a target level with respect to at least one axle, and increasing and/or decreasing the vehicle chassis level with respect to the said at least one axle based on the said comparison, so that the vehicle level becomes substantially equal to the said target level.

This has the advantage that at least some situations where the vehicle level control system behaves in a manner that is not fully desirable can be accounted for. For example, situations such as the ones described above, i.e. situations where overcompensation is performed or where the result is a vehicle with too low a chassis level can, at least to some extent, be avoided.

Further characteristics of the present invention, and advantages thereof, will be evident from the following detailed description of preferred embodiments and appended drawings, which are given by way of example only, and are not to be construed as limiting in any way.

### Brief description of the drawings

Fig. 1A discloses an exemplary vehicle, provided with an exemplary vehicle level control system according to the present invention.
Fig 1B discloses a portion of the vehicle suspension system of the vehicle in fig. 1A more in detail.
Fig. 2A discloses the chassis position of the vehicle at steady state speed.
Fig. 2B discloses the chassis position of the vehicle according to fig. 2A after braking with the vehicle level control system being disengaged during braking.
Fig. 2C discloses the chassis position of the vehicle according to fig. 2A after the vehicle has come to a stop following retardation with a vehicle level control system being activated.
Fig. 3 discloses an exemplary method of controlling the vehicle level control system according to the present invention.
Fig. 4 discloses a graph of vehicle level and speed during a deceleration to a full stop.
Fig. 5 discloses a control unit according to the present invention more in detail.

### Detailed description of an exemplary embodiment

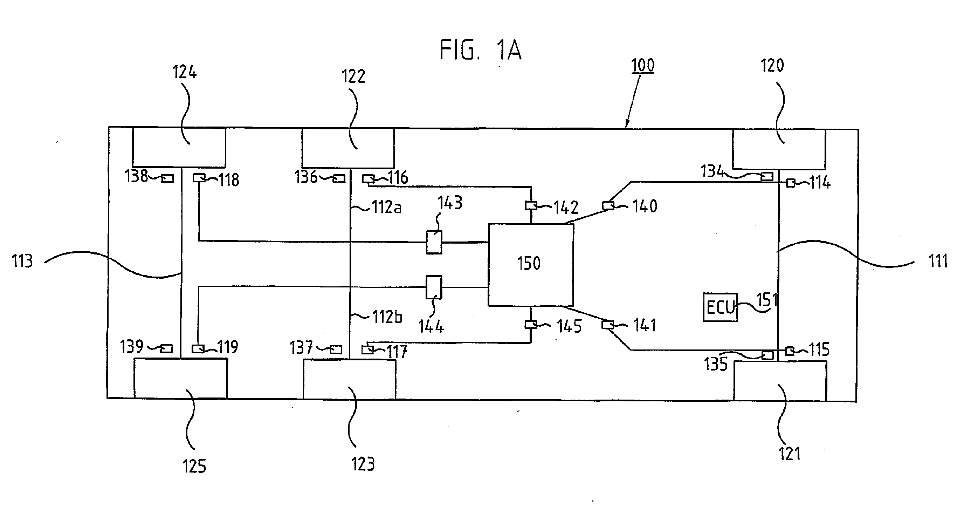

Fig. 1A schematically depicts an exemplary vehicle 100, provided with an exemplary vehicle level control system according to the present invention. The vehicle level control system constitutes part of the vehicle suspension system. The vehicle 100 comprises a steering axle 111 and half shafts 112a, 112b constituting the drive axle of the vehicle 100. The vehicle 100 also comprises a tag axle 113. The vehicle 100 comprises a pneumatic air suspension system, wherein air suspension mechanisms 114-119 is arranged at each wheel 120-125, respectively.

The function of the air suspension system is to adjust and control the level (height) of the vehicle chassis relative to the vehicle axles. In the exemplary air suspension system disclosed in fig. 1A, the air suspension (level control) mechanisms 114-119 consists of air suspension bellows that ride on suspension supports, and by appropriately filling the bellows or venting them, the level of the vehicle chassis with respect to the axles can be adjusted within the adjustment range provided by the suspension system (i.e. bellow and bellow support).

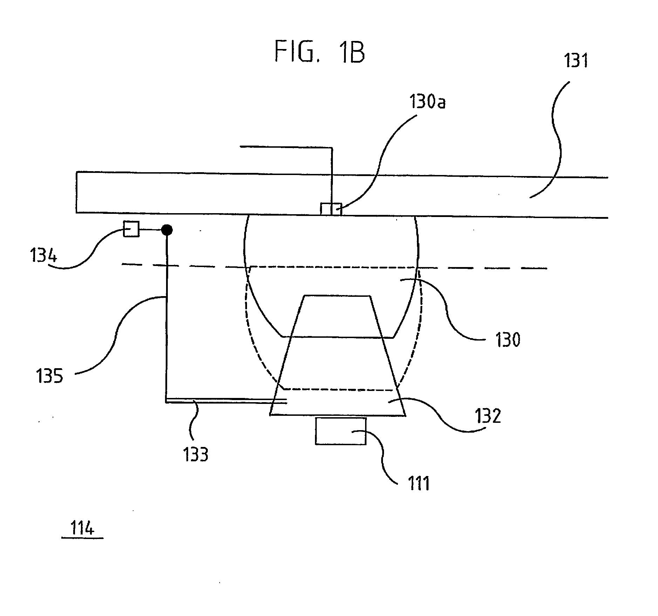

Fig. 1B discloses the suspension mechanism 114 more in detail. The suspension mechanisms 115-119 are similar to the one disclosed in fig. 1B. the suspension mechanism 114 consists of a bellow 130, which is fixed to the vehicle chassis 131. The bellow 130 comprises a connection 130a for pressurized air, the supply of which being controlled by a valve 140. As can be seen from fig. 1A, each of the suspension mechanisms 114-119 (each of the bellows) is controlled by a respective valve 140-145.

The valves 140-145 control the pressures of the bellows by controlling the supply of pressurized air to the bellows from a tank 150. With regard to fig. 1B, the bellow 130 rides on bellow support 132, which is fixed to the axle 111. By appropriately controlling the pressure of the air supplied to the bellow 130, the level of the bellow with respect to the bellow support 132 can be controlled, and thereby the level of the chassis 132 with respect to the axles can be controlled.

For example, if the bellow pressure is high, a smaller portion of the bellow support 132 will penetrate the bellow 130, and the position of the chassis with respect to the axle can be as disclosed in fig. 1B with solid lines, while if the bellow pressure, on the other hand, is low, the position of the bellow 130 (and thereby chassis) can be as disclosed by dashed lines. The bellow support 132 or axle further comprises a support 133 for carrying a lever 135 acting as an indicator of the axle-chassis distance and constituting part of a level sensor 134 arranged on the chassis. By means of the level sensor 134, the position of the chassis with respect to the axle can be determined at each suspension mechanism 114-119 (alternatively, a single level sensor can be used for each axle. Further, the level sensor(s) need not be connected to an indicator on the bellow support, but can be connected to any suitable indicator on the axle).

As an alternative to controlling each bellow by an individual valve 140-145, bellows on a common axle, e.g. bellows of support mechanisms 114, 115, can be controlled by a common valve.

The signals of the level sensors 134-139 are provided to an electronic control unit 151. For the sake of clarity, the connections from the level sensors 134-139 to the ECU 151 are not disclosed. The ECU 151 constitutes part of the vehicle control system. Vehicle control systems in modern vehicles usually consist of a communication bus system consisting of one or more communication busses to interconnect various electronic control units and components located on the vehicle. Consequently, the sensor's signals 134-139 can, for example, be connected to the ECU 151 by means of a suitable communication bus. Further, in fig. 1A the ECU 151 is exemplified as a standalone control unit. It is to be understood, however, that suspension control and level control, instead of being controlled by a dedicated control unit 151, can be implemented as part of any suitable control unit of the vehicle, e.g. any of the various control units that generally are present in, e.g., a heavy vehicle.

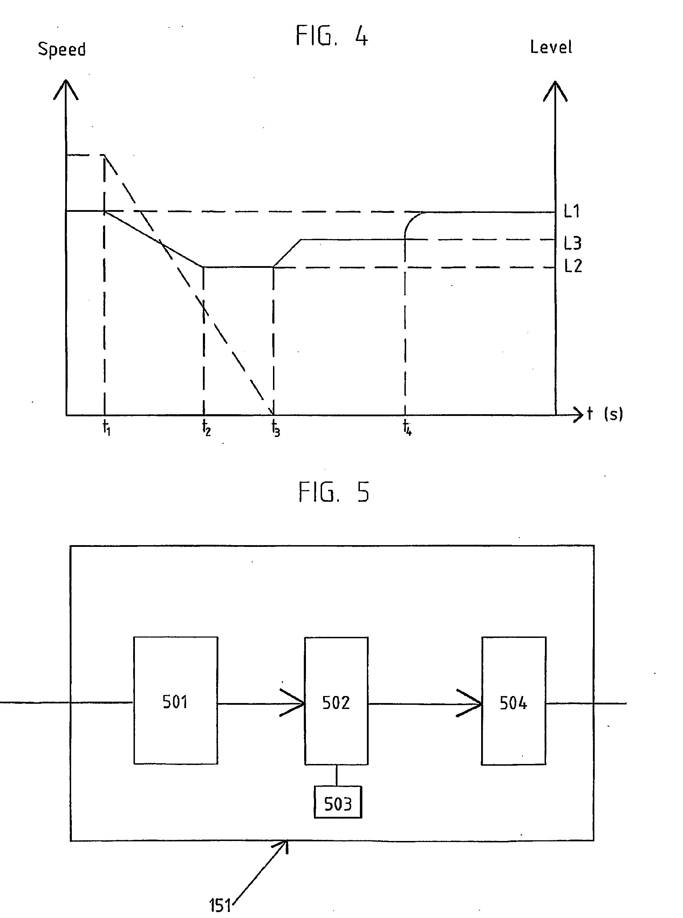

In fig. 5 the ECU 151 is shown more in detail. ECU 151 comprises means 501 for receiving signals from, e.g., the various sensors according to the above and signals representing brake pedal position. These signals can be received, e.g., via messages transmitted on a communication bus, such as a CAN bus, or by direct links to ECU 151. The received signals, together with other information, such as data transmitted from other control units, e.g. signals representing vehicle speed, can then be used in a data processing unit 502. The data processing unit 502 can, using the received sensor signals and data, and by means of a computer program, which, e.g., can be stored in a computer program product in form of storage means 503 in, or connected to the processing unit 502, perform calculations for controlling the vehicle level and generate control signals for transmission, by means of output means 504, to, e.g., valve actuators and/or other control units. The storage means can, for example, consist of one or more from the group: ROM (Read-Only Memory), PROM (Programmable Read-Only Memory), EPROM (Erasable PROM), Flash memory, EEPROM (Electrically Erasable PROM), hard disk drive. As an alternative to implementing the present invention in the ECU 151, the present invention can, as mentioned above, be implemented in any suitable electrical control unit of the vehicle control system.

Further, the valves 140-145 are also controlled by the ECU 151 by means of suitable control signals that are transmitted to valve actuators (not shown) by means of a suitable communication mechanism, such as a communication bus.

Consequently, by means of the level sensors 134-139 and controlling the valves 140-145 on the basis of signals received from the level sensors 134-139, the stiffness of the suspension of the vehicle can be controlled (by varying the pressure supplied to the various suspension mechanisms (bellows) 114-119) as well as the level (height) of the chassis with respect to the axles such that, e.g., an uneven load distribution can be compensated for and the vehicle chassis being kept at a desired level with respect to the axles at all times.

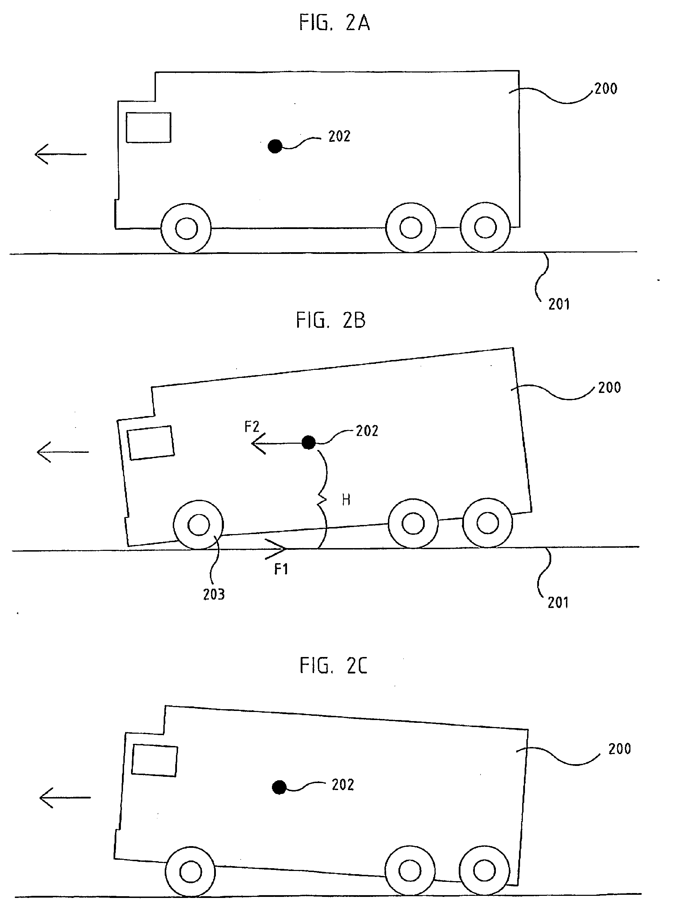

As was mentioned above, however, there are situations when the level control systems according to the above do not behave in a fully satisfactory manner. One such situation is when decelerating the vehicle by braking. This will be exemplified with reference to figs. 2A-C. In fig. 2A, a level controlled vehicle 200 is shown travelling at constant speed. As can be seen in the figure, the vehicle chassis level is controlled such that it is substantially parallel to the surface 201 on which the vehicle 200 is travelling. The figure also shows the centre of gravity 202 of the vehicle 200.

If the driver decides to decelerate the vehicle to a stop he applies the brakes, e.g. by depressing a brake pedal (or, alternatively, any other suitable brake activator. It is to be understood that the specific kind of brake system used to decelerate the vehicle is not critical to the present invention. It is also contemplated that the vehicle, if found suitable for some reason, can be automatically decelerated to a stop, i.e. without the driver taking any brake applying action). As was mentioned above, when depressing the brake pedal, a force F1 (see fig. 2B) arises in the direction opposite to the direction of travelling of the vehicle at the contact between the vehicle tyres and the surface beneath. This force is counteracted by the vehicle inertia, which can be seen as a force F2 in the direction of motion at the centre of gravity of the vehicle. The difference in height H between the centre of gravity of the vehicle and the surface will, in turn, give rise to a rotational motion with a rotational centre at the point 203, where the steering wheels contact the surface, which, consequently, results in a decrease in pressure on the rear axle and tag axle and an increase in pressure on the steering axle.

Consequently, the pressure on the bellows of the suspension mechanisms of the steering axle will be subjected to a higher force while still being pressurized with a certain pressure, with the result that the bellows will be pressed further down the bellow support. As a consequence, the distance between vehicle chassis and steering axle will decrease, while at the same time the distance between the rear axle/tag axle and the vehicle chassis increases due to the decreased pressure acting on the rear axle/tag axle.

As a result, instead of being kept at the position substantially parallel to the surface as in fig. 2A, the vehicle will, during the deceleration, be in the position disclosed in fig. 2B, i.e., leaning forwards.

When the vehicle comes to a full stop this position will, at least initially, be substantially maintained. The vehicle will rise somewhat due to the reduced pressure on the steering axle when the force acting thereupon by the vehicle inertia disappears. The vehicle will not, however, return to its level position. This is because when the pressure on the steering axle increases, the pressure of the bellow will be maintained at a set value and consequently air will be let out from the bellow (or a pressure relief valve controlling the bellow) when the bellow is pressed further down the bellow support. As a consequence, the pressure in the bellow will be at a lower level once the vehicle has come to a full stop and the increased steering axle pressure is reduced, and, therefore, the vehicle will still be leaning forward.

If, on the other hand, the vehicle level control system is activated during deceleration, the level control system will attempt to, as a response to the increased pressure acting on the steering axle, increase the pressure in the bellows of the suspension mechanisms 114, 115 to thereby raise the vehicle front. As a result, when the vehicle has come to a full stop, the pressure in the bellow will not as above, be lower than the initial pressure, but increased instead, with the consequence that, instead of leaning forward as in fig. 2B or being level as in fig. 2A, the vehicle will be in the position shown in fig. 2C, i.e., being raised in the front. The level control system will then again lower the vehicle to its desired position.

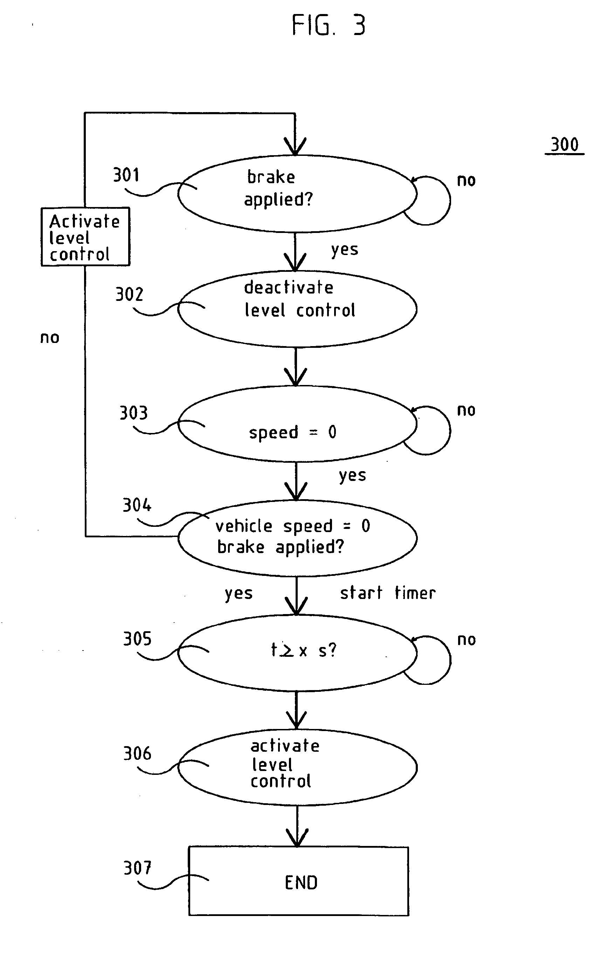

In sum, neither of the above approaches provide a fully satisfactory level control. According to the present invention, however, it is provided a method for controlling the level of a vehicle during deceleration that at least mitigates the above problem. The present invention is applicable in a vehicle such as exemplified in figs. A-B and will be exemplified with reference to fig. 3, in which a flow chart disclosing one exemplary embodiment of the present invention is exemplified.

The method starts in step 301, wherein it is determined if vehicle brakes are applied, e.g. by depressing a brake pedal. For as long as the brakes are not applied, the method remains in step 301 where level control is activated and keeping the level at some desired target level, e.g. horizontal. If, on the other hand, the brakes are applied, which, for example can be determined by providing the ECU 151 with sensor signals representing depressed brake pedal, the process continues to step 302. In step 302, the level control is deactivated and the process continues to step 303. In step 303 it is determined if the vehicle speed is zero. If the vehicle speed is not zero, i.e. the vehicle is still moving, the method remains in step 303. If, on the other hand, the vehicle speed is zero, the method continues to step 304.

In step 304 it is determined if the vehicle speed is zero and brakes are still applied. If this is not fulfilled, the process returns to step 301. If, on the other hand, these conditions are fulfilled a timer is started and the process continues to step 305, wherein it is determined if a certain period of time has lapsed. The process remains in step 305 for as long as the timer has not expired. When the timer has expired, e.g. after 0.1, 0.5, 1 or 2 or 3 seconds, the method continues to step 306, wherein the level control is again activated, whereafter the method ends in step 307 (or, alternatively, returns to step 301).

The present invention has the advantage that by detecting when the vehicle has come to a full stop and then wait a predetermined period of time, changes in the suspension system due to the decreased load on the steering axle once the deceleration is completed, can occur prior to the vehicle level control system is being activated, with the result that no overcompensation will be performed.

This is exemplified in fig. 4, which shows a graph representing vehicle speed (dashed) and vehicle level (solid) as a function of time. At t=t1 a deceleration is started, which ends at t=t3, when the vehicle has stopped. As the deceleration starts, at t=t1, the vehicle level (measured at the steering axle) starts to decrease from a target level L1 for the above reasons. At t=t2, the level reduction reaches a "steady state" L2, which is dependent on the deceleration (which is assumed constant herein). When the vehicle has stopped, at t=t3, the level raises somewhat to an intermediate level L3, due to the decrease in (steering) axle pressure as explained above. At t=t4 the level control is again activated, and the vehicle level is adjusted to the desired target level L1.

The period of time t that the method is arranged to wait once the vehicle has stopped is preferably set such that changes in the suspension system (i.e., level change from L2 to L3 in fig. 4) can occur prior to the level control begins. Consequently, the period of time t can be set to different values for different vehicles and also to different values depending on the current load of the vehicle.

Further, hitherto the present invention has been described for a vehicle having a specific kind of level control/suspension system. It is, of course, envisaged that the present invention is applicable in vehicles having other kinds of level control systems, e.g. hydraulic level control systems comprising e.g. hydraulic cylinders to control the vehicle level, and/or level control systems being separate from the vehicle suspension system. It is also envisaged that the vehicle can be a trailer.

## Claims

1. A method of controlling the level of a vehicle chassis with respect to at least one vehicle axle, the said vehicle comprising a vehicle level control system, wherein the said vehicle level control system is deactivated during deceleration, the method comprising the steps of:
- when the vehicle has stopped and the vehicle brake is still applied, reactivating the vehicle level control system after a first period of time, and
- when reactivating the said vehicle control system, comparing the vehicle chassis level with a target level with respect to at least one axle, and increasing and/or decreasing the vehicle chassis level with respect to the said at least one axle based on the said comparison, so that the vehicle level becomes substantially equal to the said target level.

2. Method according to claim 1, **characterised in that** the step of detecting that a vehicle brake is applied consists of a step of detecting activation by a driver operated brake activator, such as a brake pedal being depressed.

3. Method according to any of the claims 1-2, **characterised in that** said first period of time is at least any from the group: 0.1 seconds, 0.5 seconds 1 seconds, 2 seconds.

4. Method according to any of the claims 1-3, **characterised in that** the step of detecting that the vehicle has stopped includes a detection of the vehicle speed being zero.

5. Method according to any of the claims 1-4, **characterised in that** the said increasing and/or decreasing of the vehicle chassis level with respect to the said at least one axle consists of increasing and/or decreasing the pressure of one or more level control mechanisms.

6. A vehicle level control system for controlling the level of a vehicle chassis with respect to at least one vehicle axle, wherein the said vehicle level control system is deactivated during deceleration, the system comprising:
- means for detecting that the vehicle has stopped,
- means for detecting that a vehicle brake is applied,
- means for, when the vehicle has stopped and the vehicle brake is still applied, reactivating the vehicle level control system after a first period of time, and
- means for, when reactivating the vehicle level control system, comparing the vehicle chassis level with a target level with respect to at least one axle, and increasing and/or decreasing the vehicle chassis level with respect to the said at least one axle based on the said comparison, so that the vehicle level becomes substantially equal to the said target level.

7. System according to claim 6, **characterised in that** the said means for detecting that a vehicle brake is applied consists of means for detecting that a driver operated brake activator, such as a brake pedal, is activated.

8. System according to any of the claims 6-7, **characterised in that** the said vehicle brake is the vehicle service brake.

9. System according to any of the claims 6-8, **characterised in that** the said first period of time is at least any from the group: 0.1 seconds, 0.5 seconds 1 seconds, 2 seconds.

10. System according to any of the claims 6-9, **characterised in that** the said detection of the vehicle being stopped is a detection of the vehicle speed being zero.

11. System according to any of the claims 6-10, **characterised in that** said level control system is a pneumatic or hydraulic level control system.

12. System according to any of the claims 6-11, **characterised in that** the said axle or axles is one or more from the group: steering axle, drive axle, tag axle.

13. Vehicle, **characterised in that** it comprises a system according to any of the claims 6-12.

## Patentansprüche

1. Verfahren zum Steuern der Höhe eines Fahrzeugchassis hinsichtlich mindestens einer Fahrzeugachse, wobei das Fahrzeug ein Fahrzeughöhensteuerungssystem umfasst und das Fahrzeughöhensteuerungssystem beim Abbremsen deaktiviert ist, und wobei das Verfahren die folgenden Schritte umfasst:
- Reaktivieren des Fahrzeughöhensteuerungssystems nach einer ersten Zeitspanne, wenn das Fahrzeug angehalten hat und die Fahrzeugbremse noch betätigt ist, und
- Vergleichen der Fahrzeugchassishöhe mit einer Sollhöhe hinsichtlich der mindestens einen Achse beim Reaktivieren des Fahrzeugsteuerungssystems und Anheben und/oder Absenken der Fahrzeugchassishöhe hinsichtlich der mindestens einen Achse basierend auf dem Vergleich, so dass die Fahrzeughöhe im Wesentlichen gleich der Sollhöhe wird.

2. Verfahren nach Anspruch 1, **dadurch gekennzeichnet, dass** der Schritt des Erfassens, dass eine Fahrzeugbremse betätigt ist, aus einem Schritt des Erfassens einer Aktivierung durch einen fahrerbetätigten Bremsaktivator besteht, wie z.B. ein Bremspedal, das gedrückt wird.

3. Verfahren nach einem der Ansprüche 1-2, **dadurch gekennzeichnet, dass** die erste Zeitspanne zumindest irgendeine aus der folgenden Gruppe ist: 0,1 Sekunden, 0,5 Sekunden, 1 Sekunde, 2 Sekunden.

4. Verfahren nach einem der Ansprüche 1-3, **dadurch gekennzeichnet, dass** der Schritt des Erfassens, dass das Fahrzeug angehalten hat, eine Erfassung umfasst, dass die Fahrzeuggeschwindigkeit Null ist.

5. Verfahren nach einem der Ansprüche 1-4, **dadurch gekennzeichnet, dass** die Anhebung und/oder Absenkung der Fahrzeugchassishöhe hinsichtlich der mindestens einen Achse in der Anhebung und/oder Absenkung des Drucks eines oder mehrerer Höhensteuerungsmechanismen besteht.

6. Fahrzeughöhensteuerungssystem zum Steuern der Höhe eines Fahrzeugchassis hinsichtlich mindestens einer Fahrzeugachse, wobei das Fahrzeughöhensteuerungssystem beim Abbremsen deaktiviert ist, und das System umfasst:
- Mittel zum Erfassen, dass das Fahrzeug angehalten hat,
- Mittel zum Erfassen, dass eine Fahrzeugbremse betätigt ist,
- Mittel zum Reaktivieren des Fahrzeughöhensteuerungssystems nach einer ersten Zeitspanne, wenn das Fahrzeug angehalten hat und die Fahrzeugbremse noch betätigt ist, und
- Mittel zum Vergleichen der Fahrzeugchassishöhe mit einer Zielhöhe hinsichtlich der mindestens einen Achse beim Reaktivieren des Fahrzeughöhensteuerungssystems und zum Anheben und/oder Absenken der Fahrzeugchassishöhe hinsichtlich der mindestens einen Achse basierend auf dem Vergleich, so dass die Fahrzeughöhe im Wesentlichen gleich der Zielhöhe wird.

7. System nach Anspruch 6, **dadurch gekennzeichnet, dass** die Mittel zum Erfassen, dass eine Fahrzeugbremse betätigt ist, Mittel zum Erfassen umfasst, dass ein fahrerbetätigter Bremsaktivator, wie z.B. ein Bremspedal, aktiviert ist.

8. System nach einem der Ansprüche 6-7, **dadurch gekennzeichnet, dass** die Fahrzeugbremse die Fahrzeugbetriebsbremse ist.

9. System nach einem der Ansprüche 6-8, **dadurch gekennzeichnet, dass** die erste Zeitspanne zumindest irgendeine aus der folgenden Gruppe ist: 0,1 Sekunden, 0,5 Sekunden, 1 Sekunde, 2 Sekunden.

10. System nach einem der Ansprüche 6-9, **dadurch gekennzeichnet, dass** die Erfassung, dass das Fahrzeug angehalten wurde, eine Erfassung ist, dass die Fahrzeuggeschwindigkeit Null ist.

11. System nach einem der Ansprüche 6-10, **dadurch gekennzeichnet, dass** das Höhensteuerungssystem ein pneumatisches oder hydraulisches Höhensteuerungssystem ist.

12. System nach einem der Ansprüche 6-11, **dadurch gekennzeichnet, dass** die Achse oder Achsen eine oder mehrere aus der folgenden Gruppe ist: Lenkachse, Antriebsachse, Nachlaufachse.

13. Fahrzeug, **dadurch gekennzeichnet, dass** es ein System nach einem der Ansprüche 6-12 umfasst.

## Revendications

1. Procédé pour commander le niveau d'un châssis de véhicule par rapport à au moins un essieu de véhicule, ledit véhicule comprenant un système de commande de niveau de véhicule, ledit système de commande de niveau de véhicule étant désactivé durant la décélération, le procédé comprenant les étapes consistant à :
- lorsque le véhicule s'est arrêté et que le frein de véhicule est toujours appliqué, réactiver le système de commande de niveau de véhicule après une première période de temps, et
- lors de la réactivation du système de commande de niveau de véhicule, comparer le niveau du châssis de véhicule à un niveau cible par rapport à au moins un essieu, et augmenter et/ou diminuer le niveau du châssis de véhicule par rapport audit essieu au nombre d'au moins un en fonction de ladite comparaison, de telle sorte que le niveau du véhicule devienne sensiblement égal audit niveau cible.

2. Procédé selon la revendication 1, **caractérisé en ce que** l'étape de détection du fait qu'un frein de véhicule est appliqué consiste en une étape de détection de l'activation par un dispositif d'activation de frein actionné par un conducteur, telle que le fait qu'une pédale de frein est enfoncée.

3. Procédé selon l'une quelconque des revendications 1 à 2, **caractérisé en ce que** ladite première période de temps est au moins l'une quelconque parmi le groupe : 0,1 seconde, 0,5 seconde, 1 seconde, 2 secondes.

4. Procédé selon l'une quelconque des revendications 1 à 3, **caractérisé en ce que** l'étape de détection du fait que le véhicule s'est arrêté comprend une détection du fait que la vitesse du véhicule est de zéro.

5. Procédé selon l'une quelconque des revendications 1 à 4, **caractérisé en ce que** ladite augmentation et/ou diminution du niveau du châssis de véhicule par rapport audit essieu au nombre d'au moins un consiste en une augmentation et/ou une diminution de la pression d'un ou de plusieurs mécanismes de commande de niveau.

6. Système de commande de niveau de véhicule pour commander le niveau d'un châssis de véhicule par rapport à au moins un essieu de véhicule, dans lequel ledit système de commande de niveau de véhicule est désactivé durant la décélération, le système comprenant :
- des moyens pour détecter le fait que le véhicule s'est arrêté,
- des moyens pour détecter le fait qu'un frein de véhicule est appliqué,
- des moyens pour, lorsque le véhicule s'est arrêté et que le frein de véhicule est toujours appliqué, réactiver le système de commande de niveau de véhicule après une première période de temps, et
- des moyens pour, lors de la réactivation du système de commande de niveau de véhicule, comparer le niveau du châssis de véhicule à un niveau cible par rapport à au moins un essieu, et augmenter et/ou diminuer le niveau du châssis de véhicule par rapport audit essieu au nombre d'au moins un en fonction de ladite comparaison, de telle sorte que le niveau du véhicule devienne sensiblement égal audit niveau cible.

7. Système selon la revendication 6, **caractérisé en ce que** lesdits moyens pour détecter qu'un frein de véhicule est appliqué sont constitués par des moyens pour détecter qu'un dispositif d'activation de frein actionné par un conducteur, tel qu'une pédale de frein, est activé.

8. Système selon l'une quelconque des revendications 6 à 7, **caractérisé en ce que** ledit frein de véhicule est le frein de service du véhicule.

9. Système selon l'une quelconque des revendications 6 à 8, **caractérisé en ce que** ladite première période de temps est au moins l'une quelconque parmi le groupe : 0,1 seconde, 0,5 seconde, 1 seconde, 2 secondes.

10. Système selon l'une quelconque des revendications 6 à 9, **caractérisé en ce que** ladite détection du fait que le véhicule est arrêté est une détection du fait que la vitesse du véhicule est de zéro.

11. Système selon l'une quelconque des revendications 6 à 10, **caractérisé en ce que** ledit système de commande de niveau est un système de commande de niveau pneumatique ou hydraulique.

12. Système selon l'une quelconque des revendications 6 à 11, **caractérisé en ce que** ledit essieu ou lesdits essieux sont l'un ou plusieurs parmi le groupe : essieu de direction, essieu moteur, essieu traîné.

13. Véhicule, **caractérisé en ce qu'**il comprend un système selon l'une quelconque des revendications 6 à 12.
